# EUROPEAN PATENT APPLICATION

(11) **EP 4 837 796 A1**
(43) Date of publication of application: **11.11.2026**
(21) Application number: 25175462.8
(22) Date of filing: 09.05.2025
(51) Int. Cl.: B60T 8/17, B60T 8/172, B60W 30/18, B60W 40/105

(54) **DETERMINING A SPEED INPUT FOR A CONTROL FUNCTION OF A VEHICLE COMBINATION**

(71) Applicant: Volvo Truck Corporation, 405 08 Göteborg (SE)
(72) Inventor: HENDERSON, Leon, HÄRRYDA (SE); ARIKERE, Adithya, GÖTEBORG (SE); ALBINSSON, Anton, LERUM (SE); WÖLFINGER, Alexander, MARSTRAND (SE)
(74) Representative: Ström & Gulliksson AB

(57) **Abstract**

A computer system and computer-implemented method are disclosed for determining a speed input for a control function of a vehicle combination comprising a towing unit and at least one trailing unit. The computer-implemented method comprises: acquiring, by processing circuitry of a computer system, a reference input, *r_{req},* corresponding to a requested movement of the vehicle combination; acquiring, by the processing circuitry, a longitudinal velocity, *vₓ*, of the vehicle combination based on a longitudinal velocity, *vₓₜ*, of a trailing unit of the vehicle combination; determining, by the processing circuitry, a wheel slip value, *λ*, corresponding to the requested movement of the vehicle combination; and determining, by the processing circuitry, based on the wheel slip value, *λ*, and the longitudinal velocity, *vₓ*, one or more of a wheel speed value, *ω_{w}*, a motor speed value, *ωₘ*, and an engine speed value, *ωₑ*, for use as a speed input for a control function of the vehicle combination. A computer program product and non-transitory computer-readable storage medium are also disclosed.

## Description

### TECHNICAL FIELD

The disclosure relates generally to vehicle control. In particular aspects, the disclosure relates to determining a speed input for a control function of a vehicle combination. The disclosure can be applied in heavy-duty vehicles, such as trucks, buses, multi-unit vehicle combinations, and construction equipment. Although the disclosure may be described with respect to a particular implementation, the disclosure is not restricted to any particular implementation.

### BACKGROUND

Control of stability and traction is an important aspect of vehicle motion management. This is often provided by a number of vehicle subsystems or control functions, such as traction control, wheel slip control, differential lock (diff lock), anti-lock braking systems (ABS), and electronic stability programs (ESP). Traction control is a safety system that prevents wheel spin by automatically reducing engine power or applying brakes to individual wheels, improving stability and grip on slippery or uneven surfaces. It enhances vehicle control, especially during acceleration and in low-traction conditions. Wheel slip control (also known as active grip control) is a form of traction and anti-lock braking control, which enhances vehicle stability by adjusting braking and propulsion torques distribution to an axle or individual wheels based on continuously estimated target wheel speed or slip. Diff lock is a function that locks the different wheels or axles together using a lockable differential to force them to rotate at the same speed, regardless of traction differences. ABS prevents wheel lock-up during braking, improving control and reducing stopping distances on slippery surfaces. ESP ensures the vehicle follows the target curvature or yaw rate based on the steering wheel angle by selectively braking the different wheels of the vehicle.

However, such control functions are often limited to cases where at least some axles of a towing unit are non-driven, or at least have a drive mode disabled. These axles are used to provide speed information (e.g. wheel speed) to calculate wheel slip and provide inputs for these control functions. This limitation means that, for towing units with front- or all-wheel drive functionality, stability and traction control systems must be disabled as soon as the drive is engaged (or, in the opposite sense, the drive must be disengaged to enable these functions, thereby losing momentum). As such, use of such control functions is significantly limited.

It is therefore desired to provide systems, methods and other approaches that attempt to resolve or at least mitigate one or more of these issues.

### SUMMARY

This disclosure provides systems, methods and other approaches for determining a speed input for a control function of a vehicle combination. When speed information (e.g. wheel speed) is not available from a non-driven axle of a towing unit, for example in the case of an all-wheel drive towing unit, longitudinal velocity information is instead acquired from a trailing unit of the vehicle combination. A wheel slip value corresponding to a requested movement of the vehicle combination can then be transformed from a slip domain into a speed domain based on the longitudinal velocity information acquired from the trailing unit. This can be used as an input to control functions such as traction control, slip control, diff lock, ABS, and ESP such that they may be implemented even when speed information is not available from a non-driven axle of a towing unit. The determined speed value can also be used an input to torque-based control functions such as longitudinal and lateral motion control, brake force distribution, and active safety functions such as cruise control, lane assist, rollover protection, rear axle active steering systems, and the like.

According to a first aspect of the disclosure, there is provided a computer system for determining a speed input for a control function of a vehicle combination, the vehicle combination comprising a towing unit and at least one trailing unit, the computer system comprising processing circuitry configured to: acquire a reference input, *r_{req},* corresponding to a requested movement of the vehicle combination; acquire a longitudinal velocity, *vₓ*, of the vehicle combination based on a longitudinal velocity, *vₓₜ,* of a trailing unit of the vehicle combination; determine a wheel slip value, *λ*, corresponding to the requested movement of the vehicle combination; and determine, based on the wheel slip value, *λ*, and the longitudinal velocity, *vₓ*, one or more of a wheel speed value, *ω_{w},* a motor speed value, *ωₘ,* and an engine speed value, *ωₑ,* for use as a speed input for a control function of the vehicle combination.

The first aspect of the disclosure may seek to provide an approach for determining a speed value that can be used as an input to control functions of a vehicle combination even when speed information is not available from a non-driven axle of a towing unit. This means that, for towing units with front- or all-wheel drive functionality, control systems need not be disabled when the drive is engaged and, by the same token, the drive need not be disengaged to enable these functions, thereby preserving momentum).

Optionally in some examples, including in at least one preferred example, the reference input, *r_{req},* comprises a force request or a torque request. A technical effect may include that the determined speed value can be determined based on an initial force or a torque driving request, enabling the requested movement of the vehicle combination to be implemented appropriately.

Optionally in some examples, including in at least one preferred example, the longitudinal velocity, *vₓₜ,* of the trailing unit is the longitudinal velocity of a non-driven axle of the trailing unit. A technical effect may include that a longitudinal velocity of the trailing unit is acquired that is not affected by propulsion forces applied to an axle.

Optionally in some examples, including in at least one preferred example, the processing circuitry is configured to acquire the longitudinal velocity, *vₓₜ,* from a CAN bus of the trailing unit. A technical effect may include that existing and standardised infrastructure can be used to provide the longitudinal velocity, reducing the need for extra or upgraded infrastructure.

Optionally in some examples, including in at least one preferred example, the processing circuitry is further configured to: acquire an articulation angle, *θ*, of the trailing unit; and determine the longitudinal velocity, *vₓ*, of the vehicle combination based on the longitudinal velocity, *vₓₜ,* and the articulation angle, *θ*, of the trailing unit. A technical effect may include that a source for the longitudinal velocity is provided that can be used during turns.

Optionally in some examples, including in at least one preferred example, the processing circuitry is further configured to: acquire a pitch angle, *φ,* or pitch angular rate, *φ̇,* of at least one unit; and determine the longitudinal velocity, *vₓ*, of the vehicle combination based on the longitudinal velocity, *vₓₜ,* and the pitch angle, *φ,* or pitch angular rate, *φ̇.* A technical effect may include that a source for the longitudinal velocity is provided that can be used on non-flat road surfaces such as at the beginning of an uphill or downhill slop.

Optionally in some examples, including in at least one preferred example, the processing circuitry is configured to determine the wheel slip value, *λ*, in response to verifying the acquired longitudinal velocity, *vₓ*, as valid. A technical effect may include that the approach is implemented only when accurate and reliable longitudinal velocity information is available.

Optionally in some examples, including in at least one preferred example, the processing circuitry is configured to determine the wheel slip value, *λ*, using an inverse tyre model. A technical effect may include that a robust and adaptable approach to determining the wheel slip value is provided.

Optionally in some examples, including in at least one preferred example, the wheel slip value, *λ*, comprises one or more of a target wheel slip, *λₜ*, corresponding to the requested movement of the vehicle combination and a wheel slip limit, *λₘₐₓ.* A technical effect may include that different approached to slip control can be taken into account.

Optionally in some examples, including in at least one preferred example, the processing circuitry is further configured to transmit the determined speed value, *ω_{w}, ωₘ, ωₑ,* to one or more of a traction control function, a slip control function, a differential lock function, an anti-lock braking function, and an electronic stability program function of the vehicle combination. A technical effect may include that control functions that typically require speed information from a non-driven axle of a towing unit can be implemented even when such information is not available.

Optionally in some examples, including in at least one preferred example, the towing unit is an all-wheel drive towing unit. A technical effect may include that control functions that are not usually available in all-wheel drive may be implemented in such units.

According to a second aspect of the disclosure, there is provided a vehicle comprising the computer system of the first aspect. The second aspect of the disclosure may seek to provide a vehicle capable of determining a speed value that can be used as an input to control functions of a vehicle combination even when speed information is not available from a non-driven axle of a towing unit.

According to a third aspect of the disclosure, there is provided a computer-implemented method for determining a speed input for a control function of a vehicle combination, the vehicle combination comprising a towing unit and at least one trailing unit, the computer-implemented method comprising: acquiring, by processing circuitry of a computer system, a reference input, *r_{req},* corresponding to a requested movement of the vehicle combination; acquiring, by the processing circuitry, a longitudinal velocity, *vₓ*, of the vehicle combination based on a longitudinal velocity, *vₓₜ,* of a trailing unit of the vehicle combination; determining, by the processing circuitry, a wheel slip value, *λ*, corresponding to the requested movement of the vehicle combination; and determining, by the processing circuitry, based on the wheel slip value, *λ*, and the longitudinal velocity, *vₓ*, one or more of a wheel speed value, *ω_{w},* a motor speed value, *ωₘ,* and an engine speed value, *ωₑ,* for use as a speed input for a control function of the vehicle combination.

The third aspect of the disclosure may seek to provide an approach for determining a speed value that can be used as an input to control functions of a vehicle combination even when speed information is not available from a non-driven axle of a towing unit. This means that, for towing units with front- or all-wheel drive functionality, control systems need not be disabled when the drive is engaged and, by the same token, the drive need not be disengaged to enable these functions, thereby preserving momentum).

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to determine a speed value that can be used as an input to control functions of a vehicle combination even when speed information is not available from a non-driven axle of a towing unit.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to enable new vehicles and/or legacy vehicles to be conveniently configured, by software installation/update, to determine a speed value that can be used as an input to control functions of a vehicle combination even when speed information is not available from a non-driven axle of a towing unit.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1A** schematically shows a side view of a vehicle combination according to an example of the disclosure.
**FIG. 1B** schematically shows a top view of a vehicle combination according to an example of the disclosure.
**FIG. 2** schematically illustrates, in terms of functional blocks, a control system implemented in a vehicle combination according to an example of the disclosure.
**FIG. 3** is a flow chart of a computer-implemented method according to an example of the disclosure.
**FIG. 4** is a schematic diagram of a computer system for implementing examples disclosed herein.

Like reference numerals refer to like elements throughout the description.

### DETAILED DESCRIPTION

The detailed description set forth below provides information and examples of the disclosed technology with sufficient detail to enable those skilled in the art to practice the disclosure.

Current vehicle subsystems or control functions for control of stability and traction are often limited to cases where at least some axles are non-driven. These axles used to provide speed information to calculate wheel slip and provide inputs for these control functions. This limitation means that, for vehicles with front- or all-wheel drive functionality, stability and traction control systems for a given axle must be disabled as soon as the drive is engaged (or, in the opposite sense, the drive must be disengaged to enable these functions). As such, use of such control functions is significantly limited.

To remedy this, systems, methods and other approaches are provided for determining a speed input for a control function of a vehicle combination. When speed information is not available from a non-driven axle of a towing unit, for example in the case of an all-wheel drive towing unit, longitudinal velocity information is instead acquired from a trailing unit of the vehicle combination. A wheel slip value corresponding to a requested movement of the vehicle combination can then be transformed from a slip domain into a speed domain based on the longitudinal velocity information acquired from the trailing unit. This can be used as an input to control functions such as traction control, slip control, diff lock, ABS, and ESP such that they may be implemented even when speed information is not available from a non-driven axle of a towing unit. The determined speed value can also be used an input to torque-based control functions such as longitudinal and lateral motion control, brake force distribution, and active safety functions such as cruise control, lane assist, rollover protection, rear axle active steering systems, and the like.

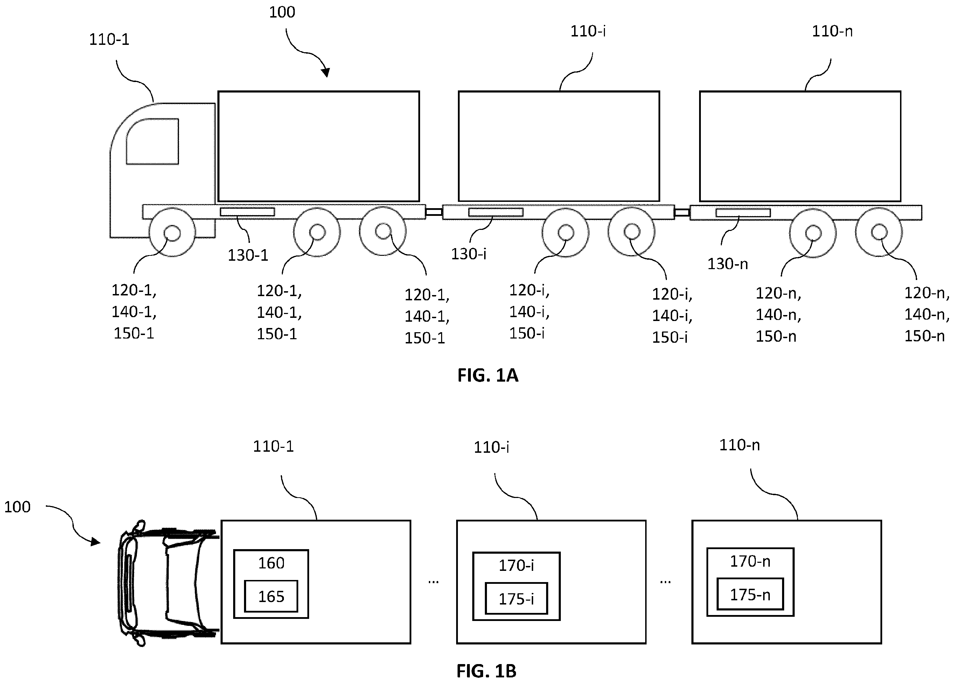

**FIG. 1A** schematically shows a side view of an example vehicle combination **100** of the type considered in this disclosure. The vehicle combination **100** comprises a number of units **110,** including a towing unit (e.g. a truck or tractor vehicle) and at least one trailing unit (e.g. a trailer). Each unit **110** may be given an index *i,* and the total number of units **110** in a vehicle combination **100** is designated *n.* Whilst two trailing units are shown, it will be appreciated that the vehicle combination **100** may comprise more or fewer trailing units connected to each other. This gives rise to different types and designations of vehicle combinations. The units **110** may be connected via one or more couplings, for example using a dolly vehicle.

A towing unit, such as the towing unit **110-1,** is generally the foremost unit in a vehicle combination **100,** and may comprise the cabin for the driver, including steering controls, dashboard displays and the like. Generally, the towing unit **110-1** is used to provide propulsion power for the vehicle combination **100.** In the example of **FIG. 1A****,** the towing unit **110-1** may also be used to store goods that are being transported by the vehicle combination 100.

A trailing unit, such as the trailing units **110-i, 110-n,** is generally used to store goods that are being transported by the vehicle combination **100.** A trailing unit may be any suitable trailing unit such as a trailer, dolly and the like. A trailing unit may also provide propulsion to the vehicle combination **100.** A trailing unit without a front axle, is known as a semi-trailer. In vehicle combinations such as that shown in **FIG. 1A****,** vehicle motion management is available on a unit level to receive requests from a manual or virtual driver to coordinate the propulsion, braking and steering. As will be discussed below, a trailing unit may be capable to providing speed information e.g. a longitudinal speed or a wheel speed.

The vehicle combination **100** may comprise one or more sources of propulsion. For example, one or more of the units **110** may comprise one or more electrical machines **120** such as electric motors. The electrical machines **120** are configured to drive, e.g. provide torque and/or steering to, one or more axles **140** or individual wheels of the unit **110.** The electrical machines **120** of a unit **110** can supply either a positive (propulsion) or negative (braking) force. Each unit **110** may comprise one or more batteries **130** configured to provide power to the electrical machines **120.** A vehicle combination **100** that uses only battery power is known as a battery electric vehicle (BEV). In some examples, for example in the case of a hybrid electric vehicle (HEV), a unit **110,** most often a towing unit **110-1,** may also include another source of propulsion, for example an internal combustion engine (ICE). The vehicle combination **100** also comprises a drivetrain (not shown) to deliver mechanical power from the propulsion source (the electrical machines **120** or the ICE) to the axles **140** or individual wheels. All units 110 may provide propulsion to the vehicle combination **100.**

Furthermore, each unit **110** may comprise one or more sets of service brakes **150.** The service brakes **150** of a unit **110** can supply a negative (braking) force. A set of service brakes **150** may be associated with one or more respective axles **140** or individual wheels of a unit **110.** The service brakes **150** may be, for example, frictional brakes e.g. electro-mechanical brakes or hydraulic brakes such as disc brakes and drum brakes. In some examples, the brakes may be pneumatic brakes. Pneumatic brakes use a compressor to fill the brake with air, which may be powered by the batteries **130.** In some examples, electric motors may also be operated as generators, in order for the electric motors to generate braking force when required. The use of electrical machines **120** to supply a negative force is known as regenerative braking. The energy recovered from regenerative braking can be stored in the batteries **130,** and so regenerative braking is generally preferred over using service brakes **150.**

The sources of propulsion (e.g. electrical machines **120** or the ICE) and braking (e.g. service brakes **150**) may be collectively known as motion support devices (MSDs) or actuators of the vehicle combination **100.** Each of the MSDs may be controlled by a global controller of the vehicle combination **100,** a unit controller of the respective unit **110,** a dedicated local MSD controller, or a combination of these.

Whilst three towing unit axles **140-1** and two axles **140-i** per trailer are shown, it will be appreciated that any suitable number of axles **140** may be provide on the respective units **110.** It will also be appreciated that any number of the towing unit axles **140-1** and/or trailer axles **140-i** may be driven axles, meaning they receive power from the one or more sources or propulsion (e.g. the electrical machines **120**). In some examples, the towing unit **110-1** may be an all-wheel drive (AWD) unit, where all axles **140-1** are driven axles. In some examples, a unit **110,** in particular a trailing unit **110-i,** may have only non-driven (i.e. free rolling) axles. This is often the case in semi-trailer combinations, where the towing unit **110-1** includes at least one driven axle **140-1** while the trailing units **110-i** include only non-driven axles **140-i.** It will also be appreciated that driven axles may be operated in a drive mode where they are driven, or in a non-drive mode where they operate as non-driven axles.

**FIG. 1B** schematically shows a top view of an example vehicle combination **100** of the type considered in this disclosure. Similarly to the example of **FIG. 1A****,** the vehicle combination **100** comprises a number of units **110,** including a towing unit **110-1** and a plurality of trailing units **110-i.** The vehicle combination **100** comprises a controller **160** comprising processing circuitry **165** configured to perform various vehicle (unit) control functions, such as vehicle motion management. The controller **160** may be a global vehicle control unit. The vehicle **100** may further comprise a plurality of unit controllers **170** comprising processing circuitry **175,** for example a controller for each trailing unit **110-i,** wherein the unit controllers **170** are configured to receive control signals from the controller **160.**

The controllers **160, 170** may determine control inputs that meet the requested global forces of the vehicle combination **100.** In particular, the controllers **160, 170** may determine how various MSDs (for example, the ICE, the electrical machines **120,** service brakes **150,** and/or steering actuators) of the vehicle combination **100** are to be controlled in order to generate requested global forces of the vehicle combination **100** as a whole. These control inputs may be determined meet certain constraints, such as power management (optimising battery usage) and safety constraints (ensuring that the trajectory for the whole combination **100** is obstacle free and collision free). For example, the controller **160** may be arranged as a higher layer control system, while the unit controllers **170** may be arranged as a lower layer control system. The higher layer controller **160** is thus arranged to determine control inputs in the vehicle domain, i.e. based on an overall vehicle condition, such as vehicle speed. The lower layer unit controllers **170** on the other hand are arranged to determine control inputs specific to the unit at hand. Furthermore, MSD controllers may be arranged to determine control inputs which are specific to a particular actuator connected to the wheel. In this way, vehicle motion management may be available on multiple levels, i.e. first on a level of the vehicle combination **100** as a whole, and then on a level of each vehicle unit **110** and MSD individually.

The controller **160** may be local to the vehicle combination **100,** or may be a remote system, implemented at a distance from the vehicle combination **100,** e.g. on a remote server. In the latter case, the towing unit **110-1** may also comprise a respective unit controller **170.** In **FIG. 1B****,** the controller **160** is shown on the towing unit **110-1** and a respective unit controller **170** is shown on each trailing unit **110-i,** although it will be appreciated that the controller **160** may be implemented in any suitable unit **110** of the vehicle combination **100.** The controller **160** may be communicatively coupled to the unit controllers **170** in any suitable way, for example via a circuit or any other wired, wireless, or network connection known in the art. Furthermore, the communicative coupling may be implemented as a direct connection between the unit controllers **170** and the controller **160** or may be implemented as a connection via one or more intermediate entities. In some examples, the controller **160** may be communicatively coupled to the unit controllers **170** via a Controller Area Network (CAN bus). In particular, the CAN bus may adhere to ISO standard 11992.

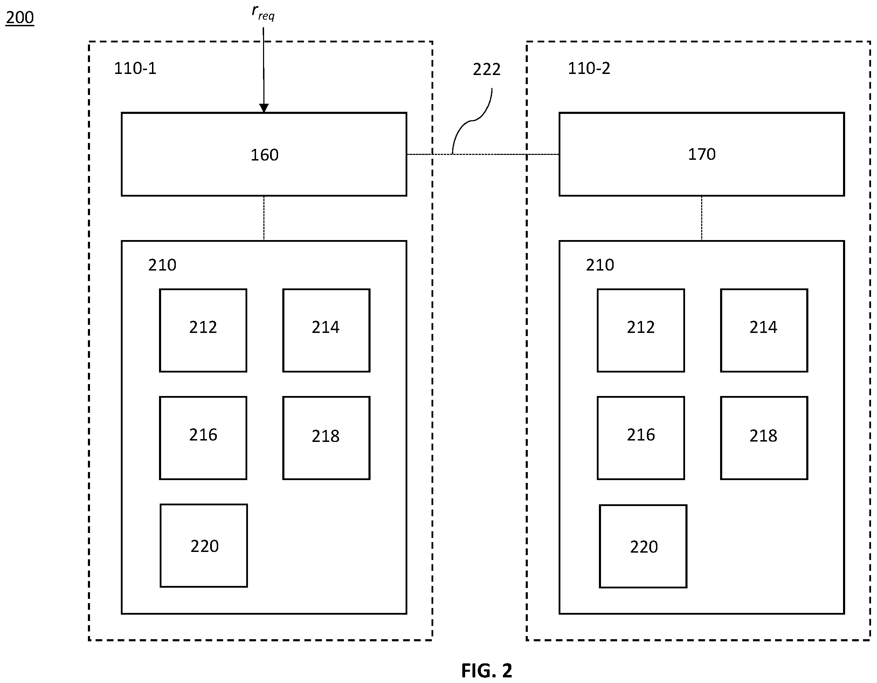

**FIG. 2** illustrates, in terms of functional blocks, a control system **200** implemented in a vehicle combination **100** comprising a towing unit **110-1** and a trailing unit **110-2,** in the same manner as discussed in relation to **FIG. 1A****.** The control system **200** comprises a controller **160** associated with the towing unit **110-1** and a controller **170** associated with the trailing unit **110-2,** in the same manner as discussed in relation to **FIG. 1B****.** One function of the controller **160** and the unit controllers **170** is to provide control inputs for vehicle subsystems or control functions **210** for control of stability and traction of the vehicle combination **100.** The control functions **210** are associated with axles **140** or individual wheels of the vehicle combination **100,** as will be discussed below.

The various modules of the control system **200** may e.g. be implemented as code running on a processing circuitry, or similar. The various modules may comprise processing circuitry configured to implement various operations disclosed below. The various modules may include a memory storing instructions that, when executed by the processing circuitry, cause the processing circuitry to perform the various operations. The various modules may be communicatively connected or connectable to each other, for example as known in the art. In the example of **FIG. 2****,** the controller **160** associated with the towing unit **110-1** and the controller **170** associated with the trailing unit **110-2** are communicatively coupled by a CAN bus **222,** such as an ISO 11992 CAN bus. In some examples, the CAN bus 222 may be implemented between an electronic braking system associated with the towing unit **110-1** and an electronic braking system associated with the trailing unit **110-2.**

The control system **200** is configured to acquire (e.g. receive or determine) a reference input, *r_{req},* corresponding to a requested movement of the vehicle combination **100.** The manoeuvre may be, for example, straight-line driving, cornering, braking and the like. The requested reference input *r_{req}* may comprise requested motion parameters of the vehicle combination **100.** For example, the requested reference input *r_{req}* may comprise a force request and/or a torque request to implement the requested motion. Additionally or alternatively, the requested reference input *r_{req}* may comprise at least one of a longitudinal acceleration *aₓ* of the vehicle combination **100** as a whole or of a unit **110** of the vehicle combination **100,** a longitudinal velocity *vₓ₁* of the towing unit **110-1,** a lateral velocity *v_{y1}* of the towing unit **110-1,** a yaw rate *ω_{zi}* of at least one unit **110** of the vehicle combination **100,** and a steering angle *δ_{f, req}* of the towing unit **110-1.**

In the example of **FIG. 2****,** the reference input, *r_{req},* is received by the global controller **160** implemented in the towing unit **110-1.** The reference input may be determined based on data from, for example, a steering wheel and/or gas/brake pedal of the combination **100,** indicating that the driver (or some other operator or system of the vehicle combination **100**) wants to change the direction and/or the speed of the vehicle combination **100** in a certain way. In some examples, the input may be (determined based on) data from elsewhere, for example any other system that may provide some indication of how the overall forces of the vehicle combination **100** are to be influenced (e.g. steered, propelled or braked). For example, the data may originate from a lane assist system, a lane following system, an emergency steering system, an emergency braking system, an automated or semi-automated drive system, for example including a vehicle model. In these implementations, the reference input, *r_{req},* may be determined by the global controller **160.**

The requested reference input *r_{req}* may be used to determine control inputs for one or more control functions **210** associated with axles **140** of the vehicle combination **100.** In particular, each unit **110** may have a traction control function **212,** slip control function **214,** diff lock function **216,** ABS function **218,** and/or ESP function **220** associated with one or more axles **140** or individual wheels. These various control functions **210** may be employed to ensure safe and efficient motion of the vehicle combination **100.** The control functions **210** may also comprise torque-based control functions such as longitudinal and lateral motion control, brake force distribution, and active safety functions such as cruise control, lane assist, rollover protection, rear axle active steering systems, and the like.

Some of these control functions **210** are traditionally controlled based on a wheel slip value *λ* corresponding to requested movement of the vehicle combination (e.g. as defined by the reference input *r_{req}*). Wheel slip is, in essence, a speed difference measured between the wheel and the vehicle and can be longitudinal or lateral. These parameters are known in the art, and not discussed in detail here. However, it is noted that the longitudinal wheel slip *λₓ* may be defined as: ${λ}_{x} = \frac{Rω - {v}_{wx}}{max \left(\left|Rω\right|, \left|{v}_{wx}\right|\right)}$ (1) where R is an effective wheel radius, *ω* is the wheel rotational speed (angular velocity), and *v_{wx}* is the wheel hub longitudinal velocity in the wheel local coordinate system. The longitudinal wheel slip *λₓ* is bounded between -1 and 1 and quantifies how much the wheel is slipping with respect to the road surface. It will be appreciated that the techniques disclosed herein can be adapted for use with any type of wheel slip definition. It is also appreciated that a wheel slip value is equivalent to a wheel speed value given a velocity of the wheel over the surface, in the coordinate system of the wheel.

The wheel slip value *λ* based on which the control functions **210** are traditionally controlled may be a target wheel slip *λₜ* corresponding to the requested movement of the vehicle combination (e.g. a wheel slip that enables a particular manoeuvre to be performed). Alternatively or additionally, the wheel slip value *λ* may be a wheel slip limit *λₘₐₓ* or *λₘᵢₙ*, for example that ensures safe operation of the vehicle combination **100.** An upper (positive) wheel slip limit *λₘₐₓ* may be used during acceleration, i.e. during propulsion, while a lower (negative) wheel slip limit *λₘᵢₙ* may be used during deceleration, i.e. during braking.

The wheel slip value *λ* may be determined using an inverse tyre model. In particular, an inverse tyre model can be used to translate requested wheel forces in the longitudinal and/or lateral direction into equivalent slips or speeds for an axle **140** or individual wheel, as known in the art. "Tyre and vehicle dynamics", Elsevier Ltd. 2012, ISBN 978-0-08-097016-5, Hans Pacejka covers the fundamentals of tyre models. See, e.g., chapter 7 where the relationship between wheel slip and longitudinal force is discussed. Further examples of the use of tyre models can be found in EP3851346, EP3960565, EP3995370, EP3995371, and EP4001029 in the name of Volvo Truck Corporation.

In some examples, one or more pre-determined inverse tyre models may be stored in memory associated with the control system **200,** e.g., as a look-up table. The inverse tyre model(s) may be stored as a function of a current operating condition of the vehicle combination **100** such that a suitable model can be from a range of models. The inverse tyre model(s) may also be implemented at least partly as an adaptive model configured to automatically or at least semi-automatically adapt to the current operating conditions of the vehicle combination **100.** This can be achieved by monitoring the response of a given wheel in terms of wheel force generated and/or monitoring the response of the vehicle combination **100** in response to one or more wheel slip requests. The adaptive model can then be adjusted to more accurately model the wheel forces obtained in response to a given wheel slip request from a wheel. This improves the accuracy and robustness of the mapping between desired wheel force and equivalent wheel slip. An inverse tyre model can also be configured to provide a gradient of the desired wheel force with respect to wheel slip at an operating point associated with the desired wheel force and a current operating condition. The gradient provides information about the behaviour of the model if a small change in input parameters is made and can be used with advantage to adjust control algorithms in, e.g., MSD controllers. For instance, the gradients can be used to adjust a gain of a control function such as a PID controller.

To provide an input for the one or more control functions **210,** the wheel slip value *λ* may be transformed into a (rotational) wheel speed value, a motor speed value (i.e. a rotational speed of an electrical machines **120**)**,** and/or an engine speed value. Wheel speed is a rotational speed of the wheel, motor speed is a rotational speed of a shaft of a motor (e.g. electrical machine), and engine speed is a rotational speed of a crankshaft of an engine (e.g. ICE). Each speed may be given in units of, e.g., rotations per minute (rpm) or angular velocity in terms radians/second (rad/sec) or degrees/second (deg/sec). However, it will be appreciated that each speed may be expressed in linear terms by scaling by a fixed tyre radius, giving units of e.g. metres/second (m/s) or kilometres/hour (km/h), where the underlying information is rotational.

To transform the wheel slip value *λ* into a speed value, a reference speed is required for this transformation. For control functions such as the control functions **210,** this typically comes from non-driven axles of the towing unit **110-1.** This limitation means that, for vehicles with front- or all-wheel drive functionality, stability and traction control systems for a given axle must be disabled as soon as the drive is engaged (or, in the opposite sense, the drive must be disengaged to enable these functions). As such, use of such control functions is significantly limited.

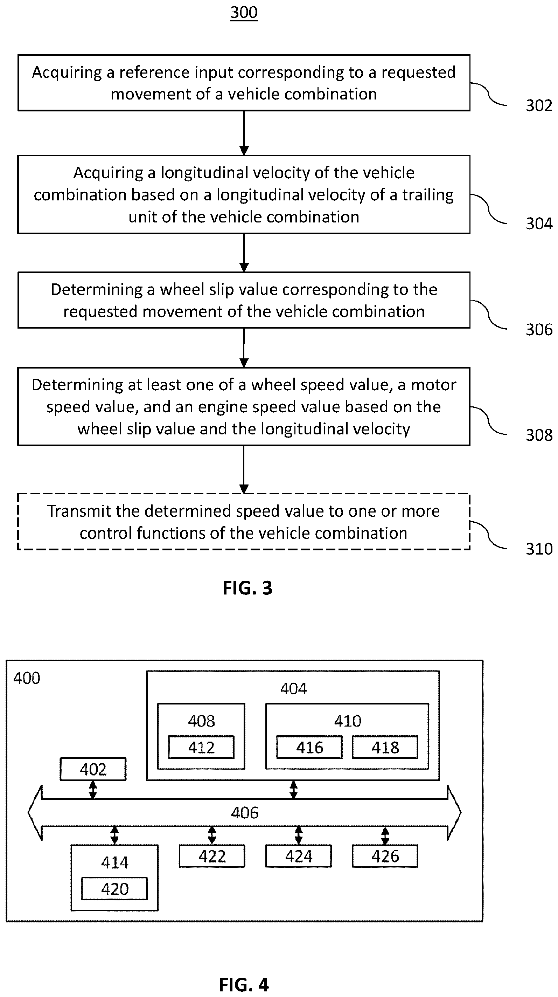

**FIG. 3** is a flow chart of a computer-implemented method **300** according to an example. The method **300** is for determining a speed input for a control function of a vehicle combination, such as the vehicle combination **100** described in relation to **FIG. 1****.** The method **300** provides a speed input for a control function such as traction control, slip control, diff lock, ABS, and ESP such that they may be implemented even when speed information is not available from a non-driven axle of a towing unit. The method **300** may be implemented by processing circuitry of a computer system (e.g., the processing circuitry **165** of the controller(s) **160** or the processing circuitry **175** of the global controller **170** described in relation to **FIGs. 1** and **2****.**

At **302,** a reference input, *r_{req},* corresponding to a requested movement of the vehicle combination **100** is acquired (e.g. received or determined). As discussed above, the manoeuvre may be, for example, straight-line driving, cornering, braking and the like and the requested reference input *r_{req}* may comprise requested motion parameters of the vehicle combination **100.** In particular, the requested reference input *r_{req}* may comprise a force request and/or a torque request to implement the requested motion.

At **304,** a longitudinal velocity, *vₓ*, of the vehicle combination **100** is acquired based on a longitudinal velocity, *vₓₜ,* of a trailing unit **110-2** of the vehicle combination **100.** The longitudinal velocity, *vₓ*, may be considered to correspond to, or be transformed to, a longitudinal velocity, *v_{wx},* of a hub of a wheel to be controlled, and may be used to determine a speed value for control functions associated with the wheel, as discussed below. The longitudinal velocity, *vₓₜ,* of a trailing unit **110-2** can be acquired in a number of different ways. For example, the longitudinal velocity, *vₓₜ,* of a trailing unit **110-2** may be measured by known speed sensors associated with the trailing unit **110-2.** In some examples, the longitudinal velocity, *vₓₜ,* of the trailing unit **110-2** may be acquired using a speed sensor associated with a non-driven axle of the trailing unit **110-2.** In some examples, the longitudinal velocity, *vₓₜ,* of the trailing unit **110-2** may be acquired or estimated in another suitable fashion known to the person skilled in the art, for example using a radar system or GPS. This longitudinal velocity, *vₓₜ,* can then be used directly as the longitudinal velocity, *vₓ*, of the vehicle combination **100,** for example in straight-line driving, or in various other calculations used to determine the longitudinal velocity, *vₓ*, of the vehicle combination **100.** For example, in turns, the steering angles on the steered axles and yaw rate may also be considered when transforming the unit longitudinal velocity, *vₓ*, to the longitudinal velocity, *v_{wx},* of the wheel hub.

In some examples, the longitudinal velocity, *vₓₜ,* of the trailing unit **110-2** may be acquired, for example by a global controller **160** implemented in the towing unit **110-1.** This may be achieved in any suitable way, for example via a circuit or any other wired, wireless, or network connection known in the art. In some examples, the longitudinal velocity, *vₓₜ,* of the trailing unit **110-2** may be acquired, for example by a global controller 160 implemented in the towing unit **110-1,** via a CAN bus associated with the trailing unit **110-2,** such as an ISO 11992 CAN bus.

In some examples, an articulation angle, *θ*, between the towing unit **110-1** and the trailing unit **110-2** is additionally acquired and used to determine or estimate the longitudinal velocity, *vₓ*, of the towing unit **110-1** based on a longitudinal velocity, *vₓₜ,* of the trailing unit **110-2,** for example as acquired via a CAN bus associated with the trailing unit **110-2.** If the articulation angle, *θ*, is sufficiently large, the longitudinal velocity, *vₓₜ,* of the trailing unit **110-2** is not in the same direction as the longitudinal velocity of the towing unit **110-1.** Therefore, the articulation angle is used to transform the longitudinal velocity, *vₓₜ,* of the trailing unit **110-2** to the towing unit **110-1,** i.e. setting the velocity of the coupling between the trailing unit **110-2** and the towing unit **110-1** to be equal in the same coordinates. The velocity of the coupling in the coordinate system of the towing unit **110-1** can then be calculated from the motion of the trailing unit **110-2** (e.g. longitudinal velocity, *vₓₜ,* lateral velocity, *v_{yt},* and yaw rate) and used as the longitudinal velocity, *vₓ* (e.g. the wheel hub longitudinal velocity, *v_{wx},* of a wheel to be controlled on the towing unit **110-1).**

In some examples, a pitch angle, *φ,* or pitch angular rate, *φ̇,* of the towing unit **110-1** or a trailing unit **110-2** is additionally acquired and used to determine or estimated the longitudinal velocity, *vₓ*, of the towing unit **110-1** based on a longitudinal velocity, *vₓₜ,* of the trailing unit **110-2,** for example as acquired via a CAN bus associated with the trailing unit **110-2.** For example, if a plane defined by the wheel hubs of the trailing unit **110-2** and a plane defined by the wheel hubs of the towing unit unit **110-1** have a pitch angle, *φ,* relative to each other (e.g. if the towing unit **110-1** is starting an uphill section with the trailing unit **110-2** still on flat ground), this should be compensated to calculate the velocity of the towing unit **110-1,** which can used as the longitudinal velocity, *vₓ* (e.g. the wheel hub longitudinal velocity, *v_{wx},* of a wheel to be controlled on the towing unit **110-1**).

**At 306,** a wheel slip value, *λ*, corresponding to the requested movement of the vehicle combination is determined. As discussed above, the wheel slip value *λ* may be a target wheel slip *λₜ* corresponding to the requested movement of the vehicle combination (e.g. a wheel slip that enables a particular manoeuvre to be performed), and/or a wheel slip limit *λₘₐₓ* or *λₘᵢₙ*, for example that ensures safe operation of the vehicle combination **100.** The wheel slip value *λ* may be determined using an inverse tyre model. In particular, an inverse tyre model can be used to translate requested wheel forces in the longitudinal and/or lateral direction into equivalent wheel slips for an axle **140** or individual wheel, as known in the art. While an inverse tyre model can be used to translate requested wheel forces to wheel speed directly, the slip is normalized with respect to vehicle speed so the slip target will not change at normal operating speeds, and there are some issues with the definition at lower speeds. It is therefore advantageous to determine a wheel slip value, *λ*, and use it to determine a speed value in **308.**

In some examples, the wheel slip value, *λ*, may only be determined in response to verifying the acquired longitudinal velocity, *vₓ*, of the vehicle combination **100** acquired at **304** as valid. This could be achieved in any suitable manner known in the art, for example, by verifying a checksum or message/signal integrity, verifying the trailing unit **110-2** is connected by checking other trailer signals, checking that acquired wheel accelerations are within a reasonable range, and/or checking that different wheel speeds are within a suitable threshold of each other.

At **308,** at least one of a wheel speed value, *ω_{w},* a motor speed value, *ωₘ,* and an engine speed value, *ωₑ,* are determined based on the wheel slip value, *λ*, determined at **306** and the longitudinal velocity, *vₓ*, acquired at **304.** The determined speed value(s) are for use as a speed input for a control function **210** of the vehicle combination **100.**

For example, a wheel speed value, *ω_{w},* may be determined based on equation (1) using the longitudinal velocity, *vₓ*, acquired at **304** as the wheel hub longitudinal velocity, *v_{wx},* and solving for the wheel rotational speed, *ω*, although it will be appreciated that other formulations for determining a wheel speed value may be used. A motor speed value, *ωₘ,* may then be determined based on a determined wheel speed value, *ω_{w},* as follows: ${ω}_{m} = \frac{{ω}_{w}}{{f}_{d} {g}_{r}}$ (2) where *f_{d}* is the final drive ratio, and *gᵣ* is the gear ratio from the motor to the driveshaft. An engine speed value, *ωₑ,* may be determined based on a determined wheel speed value, *ω_{w},* as follows: ${ω}_{e} = \frac{{ω}_{w}}{{f}_{d} {g}_{r}}$ (3) where *f_{d}* is the final drive ratio, and *gᵣ* is the gear ratio from the engine to the driveshaft.

**At 310,** at the determined speed value may be transmitted to one or more control functions **210** of the vehicle combination **100.** As discussed above, the one or more control functions **210** may comprise a traction control function **212,** a slip control function **214,** a diff lock function **216,** an ABS function **218,** and/or an ESP function **220.** The control functions **210** may also comprise torque-based control functions such as longitudinal and lateral motion control, brake force distribution, and active safety functions such as cruise control, lane assist, rollover protection, rear axle active steering systems, and the like.

The method **300** provides a speed input for a control function of a vehicle combination such that the function may be implemented even when speed information is not available from a non-driven axle of a towing unit. The determined speed value can be used as an input to various control functions. In this way, a situation is avoided where control functions for a given axle must be disabled as soon as the drive is engaged, or, in the opposite sense, the drive must be disengaged to enable these functions and momentum is lost (which is a particular issue when there is only one torque source).

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:
Example 1: A computer system (160, 170, 200, 400) for determining a speed input for a control function of a vehicle combination (100), the vehicle combination (100) comprising a towing unit (110-1) and at least one trailing unit (110-2), the computer system (160, 170, 200, 400) comprising processing circuitry (165, 175, 402) configured to: acquire a reference input, *r_{req},* corresponding to a requested movement of the vehicle combination (100); acquire a longitudinal velocity, *vₓ*, of the vehicle combination (100) based on a longitudinal velocity, *vₓₜ,* of a trailing unit (110-2) of the vehicle combination (100); determine a wheel slip value, *λ*, corresponding to the requested movement of the vehicle combination (100); and determine, based on the wheel slip value, *λ*, and the longitudinal velocity, *vₓ*, one or more of a wheel speed value, *ω_{w},* a motor speed value, *ωₘ,* and an engine speed value, *ωₑ,* for use as a speed input for a control function of the vehicle combination (100).
Example 2: The computer system (160, 170, 200, 400) of example 1, wherein the reference input, *r_{req},* comprises a force request or a torque request.
Example 3: The computer system (160, 170, 200, 400) of example 1 or 2, wherein the longitudinal velocity, *vₓₜ,* of the trailing unit (110-2) is the longitudinal velocity of a non-driven axle of the trailing unit.
Example 4: The computer system (160, 170, 200, 400) of any preceding example, wherein the processing circuitry (165, 175, 402) is configured to acquire the longitudinal velocity, *vₓₜ,* from a CAN bus of the trailing unit (110-2).
Example 5: The computer system (160, 170, 200, 400) of any preceding example, wherein the processing circuitry (165, 175, 402) is further configured to: acquire an articulation angle, *θ*, of the trailing unit (110-2); and determine the longitudinal velocity, *vₓ*, of the vehicle combination (100) based on the longitudinal velocity, *vₓₜ,* and the articulation angle, *θ*, of the trailing unit (110-2).
Example 6: The computer system (160, 170, 200, 400) of any preceding example, wherein the processing circuitry (165, 175, 402) is further configured to: acquire a pitch angle, *φ,* or pitch angular rate, *φ̇,* of at least one unit (110); and determine the longitudinal velocity, *vₓ*, of the vehicle combination (100) based on the longitudinal velocity, *vₓₜ,* and the pitch angle, *φ,* or pitch angular rate, *φ̇.*
Example 7: The computer system (160, 170, 200, 400) of any preceding example, wherein the processing circuitry (165, 175, 402) is configured to determine the wheel slip value, *λ*, in response to verifying the acquired longitudinal velocity, *vₓ*, as valid.
Example 8: The computer system (160, 170, 200, 400) of any preceding example, wherein the processing circuitry (165, 175, 402) is configured to determine the wheel slip value, *λ*, using an inverse tyre model.
Example 9: The computer system (160, 170, 200, 400) of any preceding example, wherein the wheel slip value, *λ*, comprises one or more of a target wheel slip, *λₜ*, corresponding to the requested movement of the vehicle combination (100) and a wheel slip limit, *λₘₐₓ.*
Example 10: The computer system (160, 170, 200, 400) of any preceding example, wherein the processing circuitry (165, 175, 402) is further configured to transmit the determined speed value, *ω_{w}, ωₘ, ωₑ,* to one or more of a traction control function (212), a slip control function (214), a differential lock function (216), an anti-lock braking function (218), and an electronic stability program function (220) of the vehicle combination (100).
Example 11: The computer system (160, 170, 200, 400) of any preceding example, wherein the towing unit (110-1) is an all-wheel drive towing unit.
Example 12: A vehicle (100) comprising the computer system (160, 170, 200, 400) of any preceding example.
Example 13: A computer-implemented method (300) for determining a speed input for a control function of a vehicle combination (100), the vehicle combination (100) comprising a towing unit (110-1) and at least one trailing unit (110-2), the computer-implemented method (300) comprising: acquiring (302), by processing circuitry (165, 175, 402) of a computer system (160, 170, 200, 400), a reference input, *r_{req},* corresponding to a requested movement of the vehicle combination (100); acquiring (304), by the processing circuitry (165, 175, 402), a longitudinal velocity, *vₓ*, of the vehicle combination (100) based on a longitudinal velocity, *vₓₜ,* of a trailing unit (110-2) of the vehicle combination (100); determining (306), by the processing circuitry (165, 175, 402), a wheel slip value, *λ*, corresponding to the requested movement of the vehicle combination (100); and determining (308), by the processing circuitry (165, 175, 402), based on the wheel slip value, *λ*, and the longitudinal velocity, *vₓ*, one or more of a wheel speed value, *ω_{w},* a motor speed value, *ωₘ,* and an engine speed value, *ωₑ,* for use as a speed input for a control function of the vehicle combination (100).
Example 14: The computer-implemented method (300) of example 13, wherein the reference input, *r_{req},* comprises a force request or a torque request.
Example 15: The computer-implemented method (300) of example 13 or 14, wherein the longitudinal velocity, *vₓₜ,* of the trailing unit (110-2) is the longitudinal velocity of a non-driven axle of the trailing unit.
Example 16: The computer-implemented method (300) of any of examples 13 to 15, comprising acquiring, by the processing circuitry (165, 175, 402), the longitudinal velocity, *vₓₜ,* from a CAN bus of the trailing unit (110-2).
Example 17: The computer-implemented method (300) of any of examples 13 to 16, further comprising: acquiring, by the processing circuitry (165, 175, 402), an articulation angle, *θ*, of the trailing unit (110-2); and determining, by the processing circuitry (165, 175, 402), the longitudinal velocity, *vₓ*, of the vehicle combination (100) based on the longitudinal velocity, *vₓₜ,* and the articulation angle, *θ*, of the trailing unit (110-2).
Example 18: The computer-implemented method (300) of any of examples 13 to 17, further comprising: acquiring, by the processing circuitry (165, 175, 402), a pitch angle, *φ,* or pitch angular rate, *φ̇,* of at least one unit (110); and determining, by the processing circuitry (165, 175, 402), the longitudinal velocity, *vₓ*, of the vehicle combination (100) based on the longitudinal velocity, *vₓₜ,* and the pitch angle, *φ,* or pitch angular rate, *φ̇.*
Example 19: The computer-implemented method (300) of any of examples 13 to 18, comprising determining, by the processing circuitry (165, 175, 402), the wheel slip value, *λ*, in response to verifying the acquired longitudinal velocity, *vₓ*, as valid.
Example 20: The computer-implemented method (300) of any of examples 13 to 19, comprising determining, by the processing circuitry (165, 175, 402), the wheel slip value, *λ*, using an inverse tyre model.
Example 21: The computer-implemented method (300) of any of examples 13 to 20, wherein the wheel slip value, *λ*, comprises one or more of a target wheel slip, *λₜ*, corresponding to the requested movement of the vehicle combination (100) and a wheel slip limit, *λₘₐₓ.*
Example 22: The computer-implemented method (300) of any of examples 13 to 21, further comprising transmitting, by the processing circuitry (165, 175, 402), the determined speed value, *ω_{w}, ωₘ, ωₑ,* to one or more of a traction control function (212), a slip control function (214), a differential lock function (216), an anti-lock braking function (218), and an electronic stability program function (220) of the vehicle combination (100).
Example 23: The computer-implemented method (300) of any of examples 13 to 22, wherein the towing unit (110-1) is an all-wheel drive towing unit.
Example 24: A computer program product comprising program code for performing, when executed by processing circuitry (165, 175, 402), the computer-implemented method (300) of any of examples 13 to 23.
Example 25: A non-transitory computer-readable storage medium comprising instructions, which when executed by processing circuitry (165, 175, 402), cause the processing circuitry (165, 175, 402) to perform the computer-implemented method (300) of any of examples 13 to 23.

Terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (160, 170, 200, 400) for determining a speed input for a control function of a vehicle combination (100), the vehicle combination (100) comprising a towing unit (110-1) and at least one trailing unit (110-2), the computer system (160, 170, 200, 400) comprising processing circuitry (165, 175, 402) configured to:
acquire a reference input, *r_{req},* corresponding to a requested movement of the vehicle combination (100);
acquire a longitudinal velocity, *vₓ*, of the vehicle combination (100) based on a longitudinal velocity, *vₓₜ,* of a trailing unit (110-2) of the vehicle combination (100);
determine a wheel slip value, *λ*, corresponding to the requested movement of the vehicle combination (100); and
determine, based on the wheel slip value, *λ*, and the longitudinal velocity, *vₓ*, one or more of a wheel speed value, *ω_{w},* a motor speed value, *ωₘ,* and an engine speed value, *ωₑ,* for use as a speed input for a control function of the vehicle combination (100).

2. The computer system (160, 170, 200, 400) of claim 1, wherein the reference input, *r_{req},* comprises a force request or a torque request.

3. The computer system (160, 170, 200, 400) of claim 1 or 2, wherein the longitudinal velocity, *vₓₜ,* of the trailing unit (110-2) is the longitudinal velocity of a non-driven axle of the trailing unit.

4. The computer system (160, 170, 200, 400) of any preceding claim, wherein the processing circuitry (165, 175, 402) is configured to acquire the longitudinal velocity, *vₓₜ,* from a CAN bus of the trailing unit (110-2).

5. The computer system (160, 170, 200, 400) of any preceding claim, wherein the processing circuitry (165, 175, 402) is further configured to:
acquire an articulation angle, *θ*, of the trailing unit (110-2); and
determine the longitudinal velocity, *vₓ*, of the vehicle combination (100) based on the longitudinal velocity, *vₓₜ,* and the articulation angle, *θ*, of the trailing unit (110-2).

6. The computer system (160, 170, 200, 400) of any preceding claim, wherein the processing circuitry (165, 175, 402) is further configured to:
acquire a pitch angle, *φ,* or pitch angular rate, *φ̇,* of at least one unit (110); and
determine the longitudinal velocity, *vₓ*, of the vehicle combination (100) based on the longitudinal velocity, *vₓₜ,* and the pitch angle, *φ,* or pitch angular rate, *φ̇.*

7. The computer system (160, 170, 200, 400) of any preceding claim, wherein the processing circuitry (165, 175, 402) is configured to determine the wheel slip value, *λ*, in response to verifying the acquired longitudinal velocity, *vₓ*, as valid.

8. The computer system (160, 170, 200, 400) of any preceding claim, wherein the processing circuitry (165, 175, 402) is configured to determine the wheel slip value, *λ*, using an inverse tyre model.

9. The computer system (160, 170, 200, 400) of any preceding claim, wherein the wheel slip value, *λ*, comprises one or more of a target wheel slip, *λₜ*, corresponding to the requested movement of the vehicle combination (100) and a wheel slip limit, *λₘₐₓ.*

10. The computer system (160, 170, 200, 400) of any preceding claim, wherein the processing circuitry (165, 175, 402) is further configured to transmit the determined speed value, *ω_{w}, ωₘ, ωₑ,* to one or more of a traction control function (212), a slip control function (214), a differential lock function (216), an anti-lock braking function (218), and an electronic stability program function (220) of the vehicle combination (100).

11. The computer system (160, 170, 200, 400) of any preceding claim, wherein the towing unit (110-1) is an all-wheel drive towing unit.

12. A vehicle (100) comprising the computer system (160, 170, 200, 400) of any preceding claim.

13. A computer-implemented method (300) for determining a speed input for a control function of a vehicle combination (100), the vehicle combination (100) comprising a towing unit (110-1) and at least one trailing unit (110-2), the computer-implemented method (300) comprising:
acquiring (302), by processing circuitry (165, 175, 402) of a computer system (160, 170, 200, 400), a reference input, *r_{req},* corresponding to a requested movement of the vehicle combination (100);
acquiring (304), by the processing circuitry (165, 175, 402), a longitudinal velocity, *vₓ*, of the vehicle combination (100) based on a longitudinal velocity, *vₓₜ,* of a trailing unit (110-2) of the vehicle combination (100);
determining (306), by the processing circuitry (165, 175, 402), a wheel slip value, *λ*, corresponding to the requested movement of the vehicle combination (100); and
determining (308), by the processing circuitry (165, 175, 402), based on the wheel slip value, *λ*, and the longitudinal velocity, *vₓ*, one or more of a wheel speed value, *ω_{w},* a motor speed value, *ωₘ,* and an engine speed value, *ωₑ,* for use as a speed input for a control function of the vehicle combination (100).

14. A computer program product comprising program code for performing, when executed by processing circuitry (165, 175, 402), the computer-implemented method (300) of claim 13.

15. A non-transitory computer-readable storage medium comprising instructions, which when executed by processing circuitry (165, 175, 402), cause the processing circuitry (165, 175, 402) to perform the computer-implemented method (300) of claim 13.

## Amended claims

### Amended claims in accordance with Rule 137(2) EPC.

1. A computer system (160, 170, 200, 400) for determining a speed input for a control function of a vehicle combination (100), the vehicle combination (100) comprising a towing unit (110-1) and at least one trailing unit (110-2), the computer system (160, 170, 200, 400) comprising processing circuitry (165, 175, 402) configured to:
acquire a reference input, *r_{req},* corresponding to a requested movement of the vehicle combination (100);
acquire a longitudinal velocity, *vₓ*, of the towing unit (110-1) based on a longitudinal velocity, *vₓₜ,* of a trailing unit (110-2) of the vehicle combination (100);
determine a wheel slip value, *λ*, corresponding to the requested movement of the vehicle combination (100); and
determine, based on the wheel slip value, *λ*, and the longitudinal velocity, *vₓ*, one or more of a wheel speed value, *ω_{w}*, a motor speed value, *ωₘ*, and an engine speed value, *ωₑ,* for use as a speed input for a control function of the vehicle combination (100).

2. The computer system (160, 170, 200, 400) of claim 1, wherein the reference input, *r_{req},* comprises a force request or a torque request.

3. The computer system (160, 170, 200, 400) of claim 1 or 2, wherein the longitudinal velocity, *vₓₜ,* of the trailing unit (110-2) is the longitudinal velocity of a non-driven axle of the trailing unit.

4. The computer system (160, 170, 200, 400) of any preceding claim, wherein the processing circuitry (165, 175, 402) is configured to acquire the longitudinal velocity, *vₓₜ,* from a CAN bus of the trailing unit (110-2).

5. The computer system (160, 170, 200, 400) of any preceding claim, wherein the processing circuitry (165, 175, 402) is further configured to:
acquire an articulation angle, *θ*, of the trailing unit (110-2); and
determine the longitudinal velocity, *vₓ*, of the towing unit (110-1) based on the longitudinal velocity, *vₓₜ,* and the articulation angle, *θ*, of the trailing unit (110-2).

6. The computer system (160, 170, 200, 400) of any preceding claim, wherein the processing circuitry (165, 175, 402) is further configured to:
acquire a pitch angle, *φ,* or pitch angular rate, *φ̇,* of at least one unit (110); and
determine the longitudinal velocity, *vₓ*, of the towing unit (110-1) based on the longitudinal velocity, *vₓₜ,* and the pitch angle, *φ,* or pitch angular rate, *φ̇*.

7. The computer system (160, 170, 200, 400) of any preceding claim, wherein the processing circuitry (165, 175, 402) is configured to determine the wheel slip value, *λ*, in response to verifying the acquired longitudinal velocity, *vₓ*, as valid.

8. The computer system (160, 170, 200, 400) of any preceding claim, wherein the processing circuitry (165, 175, 402) is configured to determine the wheel slip value, *λ*, using an inverse tyre model.

9. The computer system (160, 170, 200, 400) of any preceding claim, wherein the wheel slip value, *λ*, comprises one or more of a target wheel slip, *λₜ*, corresponding to the requested movement of the vehicle combination (100) and a wheel slip limit, *λₘₐₓ.*

10. The computer system (160, 170, 200, 400) of any preceding claim, wherein the processing circuitry (165, 175, 402) is further configured to transmit the determined speed value, *ω_{w}, ωₘ*, *ωₑ,* to one or more of a traction control function (212), a slip control function (214), a differential lock function (216), an anti-lock braking function (218), and an electronic stability program function (220) of the vehicle combination (100).

11. The computer system (160, 170, 200, 400) of any preceding claim, wherein the towing unit (110-1) is an all-wheel drive towing unit.

12. A vehicle (100) comprising the computer system (160, 170, 200, 400) of any preceding claim.

13. A computer-implemented method (300) for determining a speed input for a control function of a vehicle combination (100), the vehicle combination (100) comprising a towing unit (110-1) and at least one trailing unit (110-2), the computer-implemented method (300) comprising:
acquiring (302), by processing circuitry (165, 175, 402) of a computer system (160, 170, 200, 400), a reference input, *r_{req},* corresponding to a requested movement of the vehicle combination (100);
acquiring (304), by the processing circuitry (165, 175, 402), a longitudinal velocity, *vₓ*, of the towing unit (110-1) based on a longitudinal velocity, *vₓₜ,* of a trailing unit (110-2) of the vehicle combination (100);
determining (306), by the processing circuitry (165, 175, 402), a wheel slip value, *λ*, corresponding to the requested movement of the vehicle combination (100); and
determining (308), by the processing circuitry (165, 175, 402), based on the wheel slip value, *λ*, and the longitudinal velocity, *vₓ*, one or more of a wheel speed value, *ω_{w}*, a motor speed value, *ωₘ*, and an engine speed value, *ωₑ*, for use as a speed input for a control function of the vehicle combination (100).

14. A computer program product comprising program code for performing, when executed by processing circuitry (165, 175, 402), the computer-implemented method (300) of claim 13.

15. A non-transitory computer-readable storage medium comprising instructions, which when executed by processing circuitry (165, 175, 402), cause the processing circuitry (165, 175, 402) to perform the computer-implemented method (300) of claim 13.
